# EUROPEAN PATENT SPECIFICATION

(11) **EP 1 571 525 B1**
(45) Date of publication and mention of the grant of the patent: **27.06.2012**
(21) Application number: 05101394.4
(22) Date of filing: 24.02.2005
(51) Int. Cl.: G06F 21/20

(54) **A method, a hardware token, and a computer program for authentication**
Ein Verfahren, ein Hardware-Token, und ein Computerprogramm zur Authentifikation
Un procédé, un jeton matériel et un logiciel d'authentification

(30) Priority: 27.02.2004 JP 2004052835
(43) Date of publication of application: 07.09.2005
(73) Proprietor: International Business Machines Corporation, Armonk, NY 10504 (US)
(72) Inventor: Satoh, Masakazu, Winchester SO21 2JN Hampshire (GB)
(74) Representative: Shaw, Anita

(56) References cited:
- WO-A-00/54126
- US-A- 6 088 450
- US-A1- 2004 031 856
- US-B1- 6 233 685

## Description

### Technical field

The present invention relates to a method and so on for authenticating a person in question and, more particularly, to an authentication method and so on using a hardware token such as an IC card.

### Background art

In recent years, electronic commerce activities in companies for example have been increased and there have been rapidly increasing tendencies to protect personal information in companies. For example, leakage of personal information from a company leads to a considerable loss of social trust in the company, largely influencing the company management. On the other hand, hire of leased employees and outsourcing of operations have become prevalent in companies, and the kind of persons accessing intra-company networks for example and the form of access to such networks have been diversified. As a result, even in the case of an intra-company network, it is difficult to maintain a system in a secure state if only conventional user IDs and passwords are used. A high level of security is also required in settlement systems, various management systems in the field of education, public systems related to administrative offices, taxation businesses and so on, distribution systems using electronic money for example, etc., as well as in intra-company systems. Under these circumstances, techniques for individual authentication using hardware tokens typified by IC cards have been adopted to cope with menaces such as "eavesdrop", "falsification" and "spoofing".

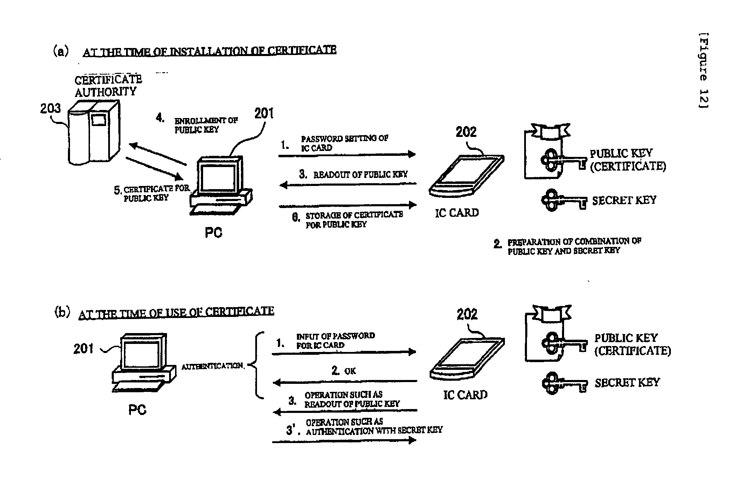

Figures 12(a) and 12(b) are diagrams for explaining a conventional password authentication method using an IC card. Figure 12(a) shows processing at the time of installation of a certificate, and Figure 12(b) shows processing at the time of use of the certificate. In the figures are illustrated a computer (PC) 201 which accesses a remote access unit (not shown) via a network such as the Internet, and an IC card 202 connected to the computer 201 by being inserted in an IC card reader/writer for example. A certificate authority connected to the computer 201 via the Internet is also illustrated.

In the conventional password authentication method, a password (PIN (personal identity number) code) is first set in the IC card 202 from the computer 201 at the time of installation of a certificate shown in Figure 12(a). In the IC card 202, a combination of a public key and a secret key is made. Thereafter, the computer 201 reads out the public key from the IC card 202. The computer 201 makes an application to the certificate authority 203 for enrollment of the public key. The certificate authority 203 issues a certificate of this public key to the computer 201. The computer 201 stores in the IC card 202 the public key certificate obtained from the certificate authority 203.

Use of the certificate shown in Figure 12(b) is as described below. The IC card 202 is connected to the computer 201. The password of the IC card 202 is thereafter input through the computer 201. Collation of the password is performed in the IC card 202. In the case where the correct password is input, a reply "OK" indicating that the password is correct is output from the IC card 202 to the computer 201. Password input and collation performed in this manner enable authentication of a person who has accessed the computer 201 by inserting the IC card 202 in the IC card reader/writer as to whether the person accessing the computer 201 (the person who has input the password) is the authorized person. Thereafter, readout of the public key, authentication with the secret key and so on are performed between the computer 201 and the IC card 202.

As a conventional art described in a document, a method of implementing individual authentication using a certificate stored in an IC card has been proposed, see for example, Yoshio Sato, "Individual Authentication by Smart Card" UNISYS TECHNOLOGY REVIEW No. 73, May 2002 (pp 137-139. In this document, prevention of unauthorized use is discussed as a problem to be studied for realization of individual authentication. In this document are proposed prevention of use of an IC card by an unauthorized person, prevention of an unauthorized person from using an IC card, prevention of stealing of a secret key, early detection of unauthorized use, measures to be taken after detection, measures to be taken when an IC card is unusable, etc.

In the individual authentication method shown in Figures 12(a) and 12(b), an IC card 202 is used to store a digital certificate of a user public key and a mated secret key. The combination of the digital certificate and the secret key stored in the IC card 202 is used as a user authentication means when a connection a private network is made from a remote base or the like by using a VPN (virtual private network) or the like. That is, conventionally, not a method in which a certificate is incorporated in a Web browser on the computer 201 but a method in which a certificate is stored in a hardware token such as IC card 202 which can be carried as a "key" is used, thus operating the individual authentication device by using a hardware token.

However, there is a risk of a hardware token such as IC card 202 being lost or stolen. Conventionally, a kind of password for access to a hardware token is set to enable information in the hardware token to be protected from being accessed by a third person even in a case where the third person obtains the hardware token. However, a password is not a sufficiently sturdy protection means because it may be stolen through a furtive glance when input or may be leaked through a note inadvertently written by the user. The essential purpose of authentication using a digital certificate is to prevent such a fault relating to a password. If a smart card is protected against access only by using a password, a security hole remains at this step. A part of corresponding problems are posed in the above-mentioned non-patent document 1, but no discussion following the posing is made. Only operational measures, e.g., "not to leave on a desk, etc.", "not to use a PIN using the date or birth or the like", "to enable early detection of unauthorized use by indicating the login date" are discussed, which cannot be a substantially solution to the unauthorized use problem.

US published patent US 2004/0031856 describes an interactive authentication system which allows a consumer to interact with a base station, such as broadcast media (e.g. television and radio) or PC, to receive coupons, special sales offers, and other information with an electronic card.

### Disclosure of the invention

The present invention addresses above-described technical problem, and advantageously improves the security level of a system for authentication using a hardware token such as an IC card. Another advantage provided by the present invention is a device for enabling a hardware token to be used only in a particular computer. Yet another advantage provided by the present invention is a device for enabling a hardware token to be used only a plurality of computers or one computer certificated by a particular certificate authority. Yet another advantage of the present invention is to provide a hardware token such as an IC card having a markedly improved level of security against unauthorized access. Advantageously, a combination of another digital certificate and a secret key is used as authentication means for permission of access to a hardware token instead of a password to effectively improve the level of security against unauthorized access when the hardware token is used.

The present invention provides an authentication method as claimed in claim 1, an authentication system as claimed in claim 4, and a computer program as claimed in claim 5.

### Brief description of the drawings

The present invention will now be described, by way of example only, with reference to preferred embodiments thereof, as illustrated in the following drawings:

Figure 1 is a diagram showing the overall configuration of a personal authentication system to which the present invention is applied in embodiments of the present invention (Embodiment 1 and Embodiment 2);

Figure 2 is a block diagram showing the configuration (hardware and software) of a computer;

Figure 3 is a block diagram showing the hardware configuration of the hardware token;

Figure 4 is a diagram for outlining processing with respect to installation of a user certificate in Embodiment 1;

Figure 5 is a diagram for outlining processing with respect to use of a user certificate in Embodiment 1;

Figure 6 is a control flow chart showing processing at the time of user certificate installation shown in Figure 4;

Figure 7 is a control flowchart showing processing at the time of use of a user certificate shown in Figure 5;

Figure 8 is a diagram for outlining processing with respect to installation of a user certification in Embodiment 2;

Figure 9 is a diagram for outlining processing with respect to use of a user certificate in Embodiment 2;

Figure 10 is a control flow chart showing processing at the time of user certificate installation shown in Figure 8;

Figure 11 is a control flowchart showing processing at the time of use of a user certificate shown in Figure 9; and

Figures 12(a) and 12(b) are diagrams for explaining a conventional password authentication method using an IC card.

### Best mode for carrying out the invention

### Embodiment 1

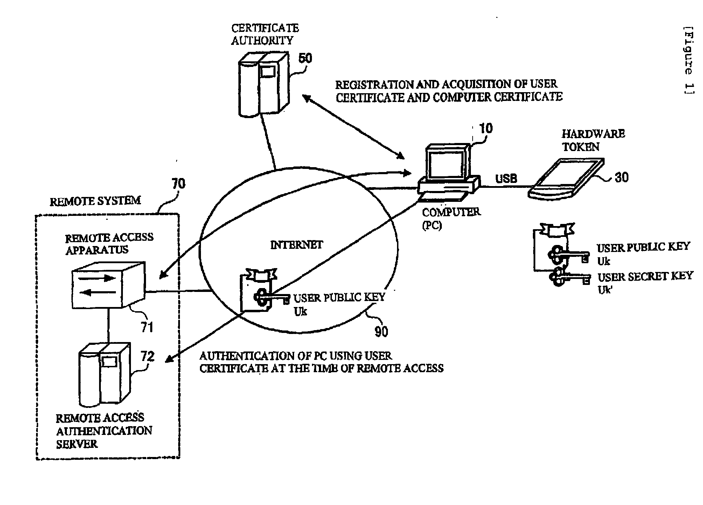

Figure 1 is a diagram showing the overall configuration of a personal authentication system to which the present invention is applied in embodiments of the present invention (Embodiment 1 and Embodiment 2). The personal authentication system to which the present invention is applied in embodiments of the present invention has a computer (PC) 10 which is a client-side PC (personal computer) which makes remote accesses, and a hardware token 30 which performs personal authentication with the computer 10. In Figure 1 are also illustrated, as units connected to the computer 10 via the Internet 90, a certificate authority 50 for registration and acquisition of a user certificate and a computer certificate, and a remote system 70 comprising an intra-company system in a company for example. The remote system 70 has a remote access apparatus 71 connected to the Internet 90 and capable of access to and from the computer 10, and a remote access authentication server 72 which authenticates the computer 10 by using a user certificate at the time of remote access. Each of digital certificates including a user certificate contains information such as a serial number, a name of the certificate authority 50 that has issued the certificate, an expiration date, a name of the owner (user), a public key for the owner.

The hardware token 30 is inserted in an IC card reader/writer for example and is connected to the computer 10 via a USB (universal serial bus) for example. A user public key Uk and a user secret key Uk' are stored in the hardware token 30. Ordinarily, the hardware token 30 is one of IC cards collectively called Smart Card (trademark). Other examples of the hardware token 30 are a plastic card, a magnetic card and an optical card. IC cards each usable as the hardware token 30 include contact-type cards such as memory cards and microprocessor cards, and noncontact-type cards such as near-contact-type, proximate-type, vicinal-type and microware-type cards.

The certificate authority 50 is a third party agency which issues digital certificates and assures that a public key is authentic. Examples of the certificate authority 50 are Toriton, Inc. and VeriSign Japan K.K. The computer 10 makes an application to the certificate authority 50 for registration of the user public key Uk and obtains a certificate for a user public key Uk from the certificate authority 50. The computer 10 accesses the remote access authentication server 72 by using the user public key Uk stored in the hardware token 30. At the time of this remote access, the remote access authentication server 72 authenticates the computer 10 by using a user certificate issued by the certificate authority 50, thus ensuring certain security.

When the user public key Uk stored in the hardware token 30 is read out, permission to access the hardware token 30 from the computer 10 is required. Conventionally, a password is used for this permission to access the hardware token 30. In this embodiment, however, a combination of another digital certificate and a secret key other than the conventional password is used for access permission. For example, a computer certificate can be used as the "another digital certificate" and "secret key combination" referred to therein. Presently, in Windows (trademark) systems and the like, a computer certificate can be issued for a subject for which a certificate is to be issued, as well as for a user. When authentication of a Smart Card using a computer certificate is performed, only the rightful user of a computer having a combination of this computer certificate and a secret key can access the hardware token 30. In Embodiment 1, "rightful" used herein denotes in a narrow sense a particular computer 10 which a user of the hardware token 30 to which a user certificate is issued is permitted to use. "Rightful" in Embodiment 2 described below denotes a computer 10 in which a combination of a computer certificate issued from a particular certificate authority 50 and a secret key is held. However, the method in this embodiment (Embodiment 1 and Embodiment 2) and the conventional authentication based on the password method are in an orthogonal relationship with each other, and only the method of this embodiment may be used for authentication or a combination of the using the password method may be used for authentication.

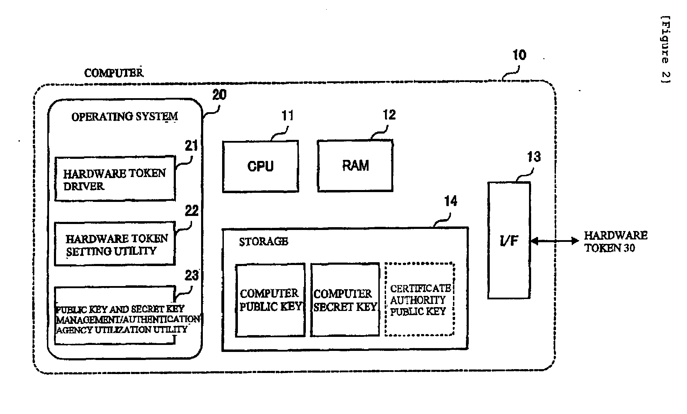

Figure 2 is a block diagram showing the configuration (hardware and software) of the computer 10. The computer 10 has a CPU 11 which functions as a brain of the entire computer 10 and executes various programs under the control of an operating system (OS) 20, a RAM 12 used as a main work memory for the CPU 11, and an interface (I/F) 13 through which communication with the hardware token 30 is performed. The computer 10 also has a storage 14 constituted by, for example, a ROM and an auxiliary storage, e.g., a hard disk unit. In the storage 14, a computer public key, a computer secret key and, if necessary, a certificate authority public key are stored. The interface 13 comprises, for example, an IC card reader/writer if the hardware token 30 is an IC card for example.

The operating system 20 is stored in the ROM in advance, and is executed by being written to the RAM 12 at the time of execution by the CPU 11. The operating system 20 thus operated is provided with a hardware token driver 21 which drives the hardware token 30, a hardware token setting utility 22 which is a piece of software for setting the hardware token 30, and a public key and secret key management/authentication agency utilization utility 23 which is a piece of software for managing a public key and a secret key and for utilizing the certificate authority 50.

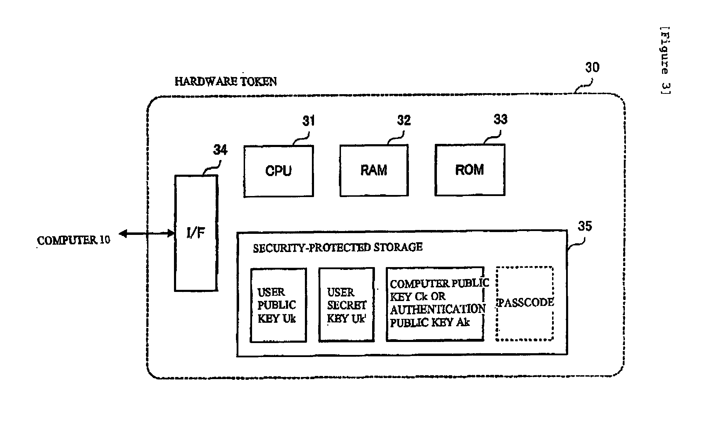

Figure 3 is a block diagram showing the hardware configuration of the hardware token 30. The hardware token 30 has a CPU 31 for overall control, a RAM 32 which is a rewritable memory used as a work memory for the CPU 31, and a ROM 33 in which a program executed in the hardware token 30 is stored. The hardware token 30 also has an interface (I/F) 34 communicating with, for example, an IC card reader/writer connected to the computer 10. The hardware token 30 also has a security-protected storage 35 constituted by a non-volatile memory for example. As the security-protected storage 35, an EEPROM (electrically erasable programmable read-only memory), a flash memory or an FeRAM (ferro-electric random access memory) may be used. In the security-protected storage 35, a user public key Uk, a user secret key Uk' and a computer public key Ck or a certificate authority public key Ak are stored. A passcode used at the time of password setting may be stored in the storage 35 if necessary.

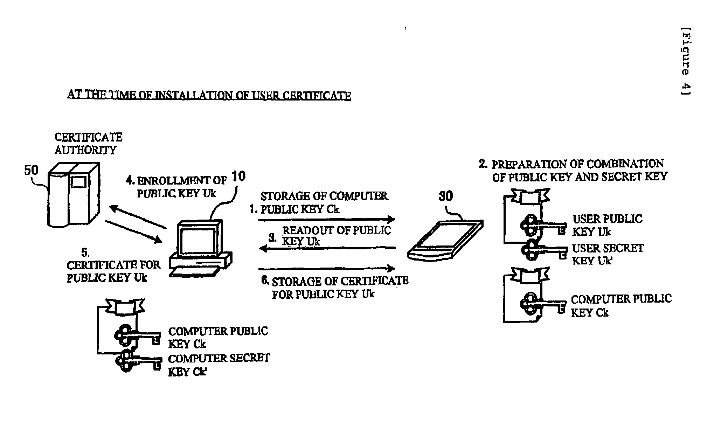

The method of personal authentication in Embodiment 1 using the above-described functional configuration will be described with reference to Figures 4 to 7. In the description made below, "user certificate Uk" refers to a user public key Uk authenticated in the certificate authority 50, "computer certificate Ck" to a computer public key Ck authentication in the certificate authority 50, and "certificate authority certificate Ak" to a certificate authority public key authentication in the certificate authority 50.

Figure 4 is a diagram for outlining processing with respect to installation of a user certificate in Embodiment 1. The computer 10 first stores a computer public key Ck in the hardware token 30 and reads out a user public key Uk stored in the memory of the hardware token 30 in the user public key Uk and a user secret key Uk' prepared in the hardware token 30. The computer 10 then makes an application to the certificate authority 50 for registration of the user public key Uk and obtains a certificate for the user public key Uk from the certificate authority 50. Thereafter, the computer 10 stores the user certificate Uk (the user public key Uk authenticated in the certificate authority 50) in the hardware token 30. As described above, when a user certificate Uk is installed in the hardware token 30 or before the user certificate Uk is installed in the hardware token 30, the computer certificate Ck for the computer 10 usable by the user of the hardware token 30 is also installed.

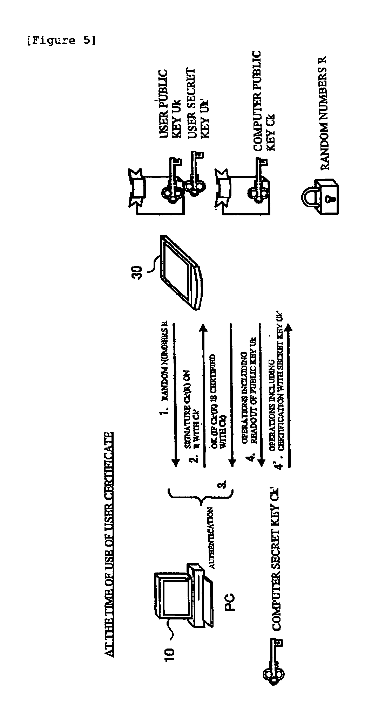

Figure 5 is a diagram for outlining processing with respect to use of a user certificate in Embodiment 1. First, random numbers R are generated from the hardware token 30 and are sent to the computer 10. The computer 10 sends back to the hardware token 30 a signature Ck'(R) formed on the random numbers R with a computer secret key Ck'. The hardware token 30 certifies Ck'(R) with Ck and permits the computer 10 to make access thereto if Ck'(R) is correct. After being permitted to make access thereafter, the computer 10 can perform operations including readout of the user public key Uk from the hardware token 30 and certification with the user secret key Uk'.

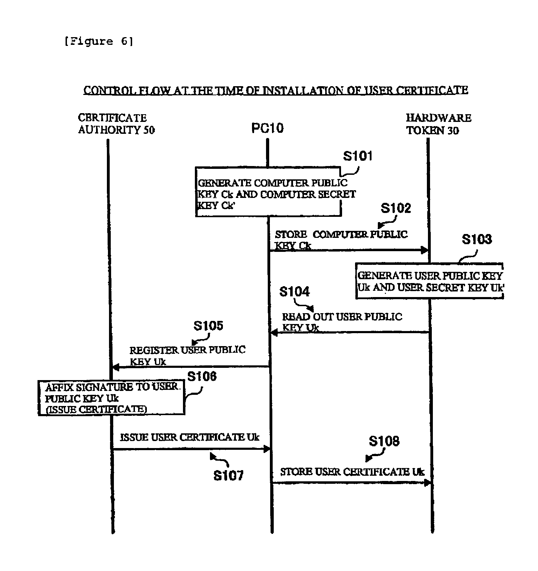

Figure 6 is a control flow chart showing processing at the time of user certificate installation shown in Figure 4. Description will be made with reference to the block diagrams shown in Figures 2 and 3. The public key and secret key management/authentication agency utilization utility 23 executed by the CPU 11 of the computer 10 generates a computer public key Ck and a computer secret key Ck' (step 101). The hardware token setting utility 22 of the computer 10 stores the computer public key Ck in the security-protected storage 35 of the hardware token 30 through the I/Fs (the interface 13 of the computer 10 and the interface 34 of the hardware token 30 (step 102).

The CPU 31 of the hardware token 30 generates a user public key Uk and a user secret key Uk' (step 103) and stores the generated user public key Uk and user secret key Uk' in the security-protected storage 35 of the hardware token 30. The public key and secret key management/authentication agency utilization utility 23 of the computer 10 reads out the user public key Uk from the hardware token 30 through the I/Fs (step 104) and makes an application to the certificate authority 50 for registration of the user public key Uk (step 105). In the certificate authority 50, a signature is affixed to the user public key Uk (step 106) and a user certificate for the user public key Uk is issued to the computer 10 (step 107). The hardware token setting utility 22 of the computer 10 stores the user certificate Uk (the user public key Uk authenticated in the certificate authority 50) in the security-protected storage 35 of the hardware token 30 through the I/Fs (step 108). Processing at the time of user certificate installation is thus completed.

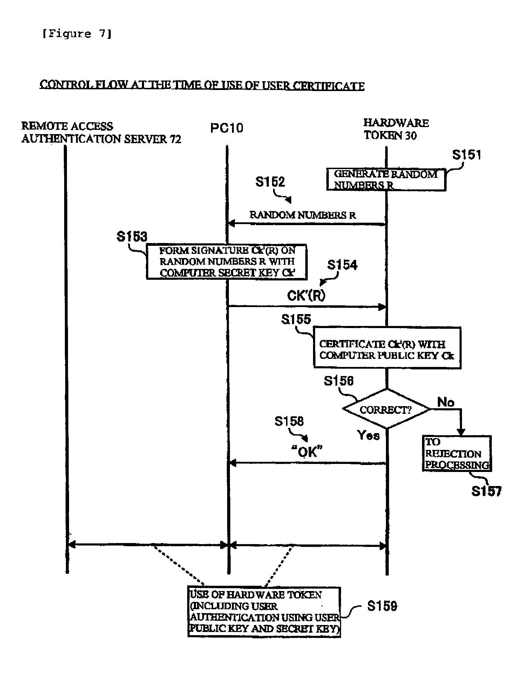

Figure 7 is a control flowchart showing processing at the time of use of a user certificate shown in Figure 5. The CPU 31 of the hardware token 30 generates random numbers R (step 151) and sends the random numbers R to the computer 10 through the I/Fs (the interface 34 of the hardware token 30 and the interface 13 of the computer 10) (step 152). In the computer 10, a signature Ck'(R) is formed on the random numbers R with a computer secret key Ck' (step 153). Ck'(R) generated is sent to the hardware token 30 through the I/Fs (step 154).

The CPU 31 of the hardware token 30 certifies Ck'(R) sent from the computer 10 with the computer public key Ck (step 155). The CPU 31 determines by certification whether or not Ck'(R) is correct (step 156). If Ck'(R) is not correct, the CPU 31 performs rejection processing (step 157). If Ck'(R) is correct, the CPU 31 informs the computer 10 that Ck'(R) is correct (OK) (step 158). Thereafter, in the computer 10, user authentication (personal authentication) is performed by using the user public key Uk and the user secret key Uk' stored in the security-protected storage 35 of the hardware token 30 and various kinds of processing are executed (step 159). While authentication is performed in the remote access authentication server 72, the hardware token 30 provides the computer 10 with information (Uk'(R')) prepared for user authentication on the basis of the user public key Uk, the user secret key Uk' and random numbers R' provided from the remote access authentication server 72. In the computer 10, operations including remote access to the remote access authentication server 72 shown in Figure 1 are executed by using the information (Uk'(R')).

According to Embodiment 1, as described above, only the computer 10 having the computer secret key Ck' corresponding to the computer public key Ck stored in the hardware token 30 can access the hardware token 30. Thus, the level of security against unauthorized use of the hardware token 30 can be improved. While the description has been made by assuming that only one computer certificate Uk is used for ease of explanation, a plurality of computer certificate may be used.

### Embodiment 2

In Embodiment 1, only a particular rightful computer 10 can use the hardware token 30. In Embodiment 2, this use form is expanded so that computers 10 authenticated with a public key of the certificate authority 50 can use the hardware token 30. The same functions as those in Embodiment 1 are indicated by the same characters, and the detailed description of them will not be repeated.

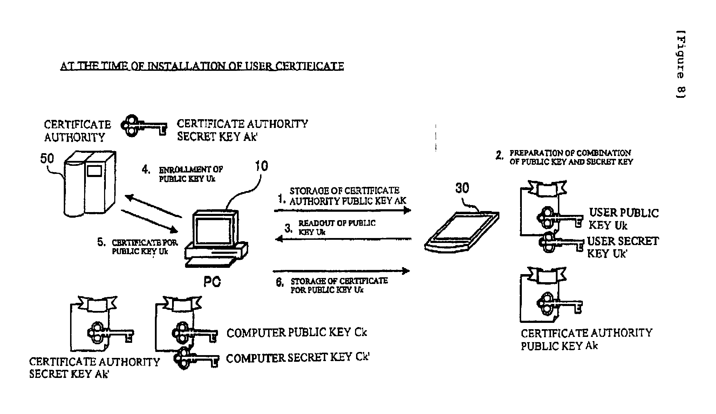

Figure 8 is a diagram for outlining processing with respect to installation of a user certification in Embodiment 2. The computer 10 first makes an application to the certificate authority 50 for registration of a computer public key Ck and receives a certificate for the computer public key Ck and a pubic key Ak of the certificate authority 50 (certificate authority public key Ak) issued from the certificate authority 50. The computer 10 stores the certificate authority public key Ak in the hardware token 30. On the other hand, the hardware token 30 forms a combination of a user public key Uk and a user secret key Uk'. The computer 10 reads out the user public key Uk from the hardware token 30, makes an application to the certificate authority 50 for registration of the user public key Uk and obtains a certificate for the user public key Uk from the certificate authority 50. The computer 10 stores the certificate for the user public key Uk in the hardware token 30. Thus, when a certificate for a user public key Uk is installed in the hardware token 30 or before the certificate for a user public key Uk is installed in the hardware token 30, a certificate authority public key Ak authenticated in the certificate authority 50 in which a computer public key Ck is authenticated is installed in a computer (a plurality of computers) 10 use of which is permitted by the user of the hardware token 30.

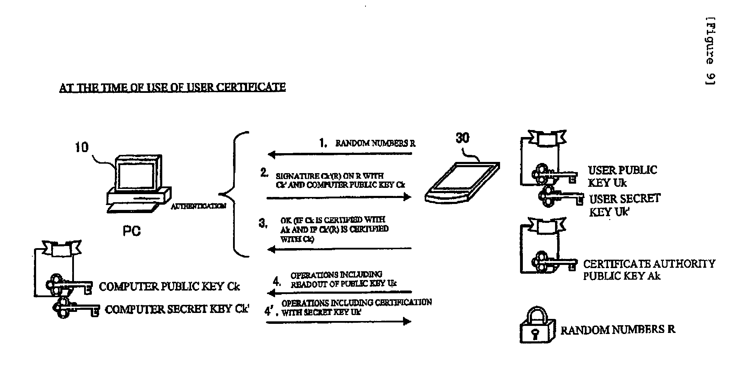

Figure 9 is a diagram for outlining processing with respect to use of a user certificate in Embodiment 2. First, random numbers R are generated from the hardware token 30 and are sent to the computer 10. The computer 10 forms a signature Ck'(R) on the random numbers R with a computer secret key Ck' and sends Ck'(R) to the hardware token 30 together with a computer certificate (including computer public key Ck). The hardware token 30 certifies Ck by using the certificate authority public key Ak authenticated in the certificate authority 50. If Ck is correct, then the hardware token 30 certifies Ck'(R) by using Ck. If Ck'(R) is correct, the hardware token 30 permits the computer 10 to make access thereto. After being permitted to make access thereafter, the computer 10 can perform operations including readout of the user public key Uk from the hardware token 30 and certification with the user secret key Uk'.

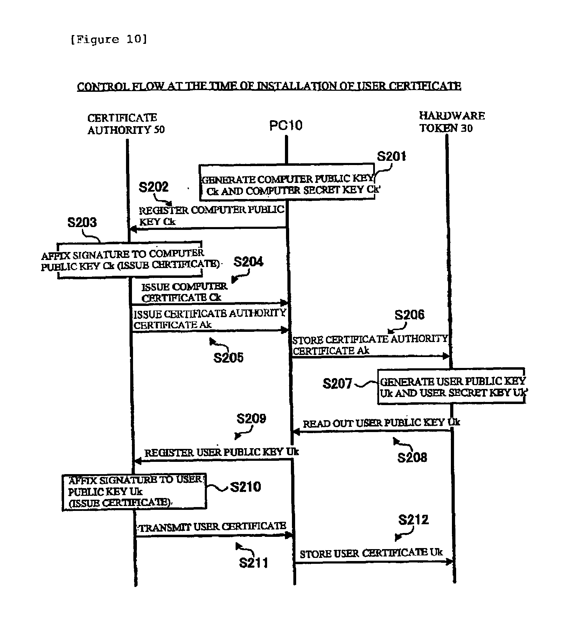

Figure 10 is a control flow chart showing processing at the time of user certificate installation shown in Figure 8. Description will be made with reference to the block diagrams shown in Figures 2 and 3. The public key and secret key management/authentication agency utilization utility 23 executed by the CPU 11 of the computer 10 generates a computer public key Ck and a computer secret key Ck' (step 201) and makes an application to the authentication section 50 for registration of the computer public key Ck (step 202). A signature is affixed to the computer public key Ck in the authentication section 50 (step 203) and a certificate for the computer public key Ck is issued from the authentication section 50 to the computer 10 (step 204). Also, a certificate authority certificate Ak authenticated in the certificate authority 50 is issued from the certificate authority 50 to the computer 10 (step 205).

The hardware token setting utility 22 of the computer 10 stores the certificate authority certificate Ak authenticated in the certificate authority 50 in the security-protected storage 35 of the hardware token 30 through the I/Fs (the interface 13 of the computer 10 and the interface 34 of the hardware token 30) (step 206). The CPU 31 of the hardware token 30 generates a user public key Uk and a user secret key Uk' (step 207) and stores the generated user public key Uk and user secret key Uk' in the security-protected storage 35 of the hardware token 30. The public key and secret key management/authentication agency utilization utility 23 of the computer 10 reads out the user public key Uk from the hardware token 30 through the I/Fs (step 208) and makes an application to the certificate authority 50 for registration of the user public key Uk (step 209). In the certificate authority 50, a signature is affixed to the user public key Uk (step 210) and a user certificate Uk for the user public key Uk is issued (transmitted) to the computer 10 (step 211). The hardware token setting utility 22 of the computer 10 stores the user certificate Uk authenticated in the certificate authority 50 in the security-protected storage 35 of the hardware token 30 through the I/Fs (step 212). Processing at the time of user certificate installation is thus completed.

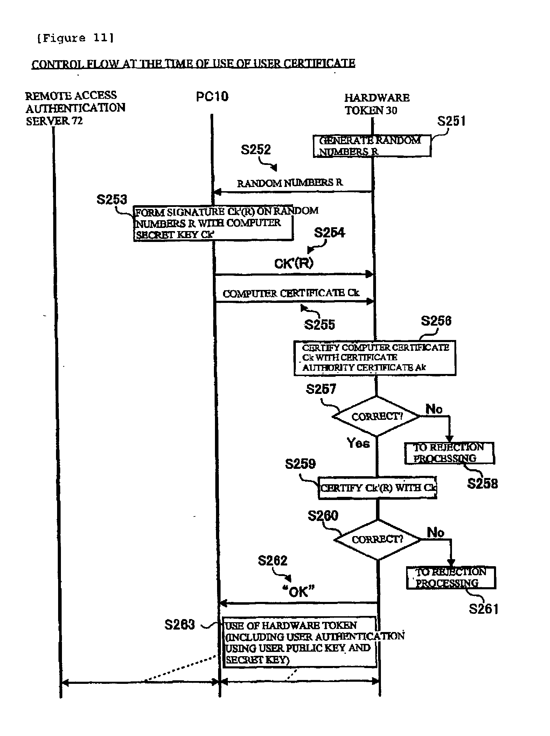

Figure 11 is a control flowchart showing processing at the time of use of a user certificate shown in Figure 9. The CPU 31 of the hardware token 30 generates random numbers R (step 251) and sends the random numbers R to the computer 10 through the I/Fs (the interface 34 of the hardware token 30 and the interface 13 of the computer 10) (step 252). In the computer 10, a signature Ck'(R) is formed on the random numbers R with a computer secret key Ck' (step 253), and Ck'(R) generated is sent to the hardware token 30 through the I/Fs (step 254). Simultaneously, the computer public key Ck (computer certificate Ck) authenticated in the certificate authority 50 is also sent to the hardware token 30 (step 255).

The CPU 31 of the hardware token 30 certifies Ck sent from the computer 10 by using the certificate authority public key Ak stored in the security-protected storage 35 (step 256). In the hardware token, determination is made by certification as to whether or not Ck is correct (step 257). If Ck is not correct, rejection processing is performed (step 258). If Ck is correct, Ck'(R) is sent from the computer 10 is certified with this Ck (step 259). Determination is made as to whether or not Ck'(R) is correct (step 260). If Ck'(R) is not correct, rejection processing is performed (step 261). If Ck'(R) is correct, information indicating that Ck'(R) is correct is sent to the computer 10 (step 262). Thereafter, in the computer 10, user authentication (personal authentication) is performed by using the user public key Uk and the user secret key Uk' stored in the security-protected storage 35 of the hardware token 30 and various kinds of processing are executed (step 263). While authentication is performed in the remote access authentication server 72, the hardware token 30 provides the computer 10 with information (Uk'(R')) prepared for user authentication on the basis of the user public key Uk and the user secret key Uk'. In the computer 10, operations including remote access to the remote access authentication server 72 shown in Figure 1 are executed by using the information (Uk'(R')).

According to Embodiment 2, as described above, the computer public key Ck is recognized as correct when the computer public key Ck is certified with the certificate authority public key Ak, and certification is performed by using the computer public key Ck, thus enabling the computer 10 having a correct computer public key Ck authenticated in the certificate authority 50 and a computer secret key Ck' to access the hardware token 30. In this manner, the level of security against unauthorized use of the hardware token 30 can be improved. Also, the hardware token 30 can be used with a plurality of computers 10 authenticated in a particular certificate authority 50, thus achieving a large improvement in convenience. While it is assumed that only one certificate authority certificate Ak (certificate authority public key Ak authenticated in the above-described station 50) exists, a plurality of certificate authority public keys Ak may exist with no problem. While this embodiment has been described with respect to a case where a computer public key Ck and a computer secret key Ck' are generated in the computer 10, the certificate authority 50 may directly generate keys of these kinds and issue certificates for them in some case. Also, while this embodiment has been described with respect to a case where a user public key Uk and a user secret key Uk' are generated in the hardware token 30, the certificate authority 50 may generate keys of these kinds in some case.

In this embodiment, as described above, not a password but a combination of another digital certificate (a public key authenticated in certificate authority 50) and a secret key is used as authentication means for permission of access to the hardware token 30, thereby enabling identification of a computer 10 permitted to use the hardware token 30. Thus, an authorized use of the hardware token 30 can be inhibited and the security of the system can be effectively improved.

Good use of the present invention can be made, for example, in various computers such as notebook PCs and desktop PCs, in hardware tokens such as IC cards, and network systems using such computers and hardware tokens. Also, good use of the present invention can be made, for example, as a program executed in such computers.

### Description of symbols

- 10: Computer (PC)
- 11: CPU
- 12: RAM
- 13: Interface (I/F)
- 14: Storage
- 20: Operating system (OS)
- 21: Hardware token driver
- 22: Hardware token setting utility
- 23: Public key and secret key management/authentication agency utilization utility
- 30: Hardware token
- 31: CPU
- 32: RAM
- 33: ROM
- 34: Interface (I/F)
- 35: Security-protected storage
- 50: Certificate authority
- 70: Remote system
- 71: Remote access apparatus
- 72: Remote access authentication server
- 90: Internet

## Claims

1. An authentication method using a hardware token (30) connectable to a computer (10), said method comprising the steps of:
at the time of storing a user certificate:
generating (S103) a user public key Uk and a secret user key Uk' by means of the hardware token;
storing the user public key Uk and the secret user key Uk' in the hardware token by means of the hardware token;
storing (S102) a computer public key Ck for the computer in the hardware token by means of the computer;
reading out (S104) from the hardware token to the computer, the user public key Uk stored in the hardware token;
registering (S105) the read user public key Uk from the computer into a certificate authority;
receiving (S107) by the computer, a certificate issued from the certificate authority with respect to the user public key Uk; and
storing (S108) the issued certificate for the user public key Uk in the hardware token by means of the computer; and
at the time of using the user certificate:
sending (S 152), by the hardware token, to the computer, one or more random numbers R generated in the hardware token;
receiving by the hardware token, a signature Ck'(R) formed on the random numbers R with a computer secret key Ck';
authenticating (S 156), by the hardware token, the signature Ck'(R) using the stored computer public key Ck;
if the authentication of the signature Ck'(R) is successful, the computer accessing a remote authentication server; receiving, by the hardware token from a remote authentication server via the computer, a random number R';
signing, by the hardware token, the random number R' with the user secret key Uk';
sending, by the hardware token, the signature Uk'(R') to the remote authentication server via the computer; and
the remote access authentication server authenticating the computer by using the user certificate issued by the certificate authority.

2. The authentication method according claim 1, further comprising the steps of:
sending, from the computer to the hardware token, a certificate for the computer public key Ck authenticated in the certificate authority;
if the computer public key Ck is authenticated by the hardware token using a stored certificate for a certificate authority public key Ak of the certificate authority, receiving by the computer, authentication of the signature Ck'(R) performed by the hardware token using the computer public key Ck.

3. The authentication method according to claim 2, further comprising the steps of:
obtaining, by the computer, the certificate for the certificate authority public key Ak authenticated in the certificate authority;
storing in the hardware token the obtained certificate for the certificate authority public key Ak from the computer.

4. An authentication system having a computer (10) and a hardware token (30) connectable to the computer and adapted to perform all the steps of any of claims 1 to 3.

5. A computer program comprising program code means adapted to perform all the steps of any of claims 1 to 3, when said program is run on a computer.

## Patentansprüche

1. Verfahren zur Identitätsprüfung, welches ein Hardware-Token(30) verwendet, das mit einem Computer (10) verbunden werden kann, wobei das Verfahren die folgenden Schritte umfasst:
zum Zeitpunkt der Speicherung eines Benutzerzertifikats:
Erzeugen (S103) eines öffentlichen Benutzerschlüssels Uk und eines geheimen Benutzerschlüssels Uk' mittels des Hardware-Token;
Speichern des öffentlichen Benutzerschlüssels Uk und des geheimen Benutzerschlüssels Uk' in dem Hardware-Token mittels des Hardware-Token;
Speichern (S102) eines öffentlichen Computerschlüssels Ck für den Computer in dem Hardware-Token mittels des Computers;
Auslesen (S104) des öffentlichen Benutzerschlüssels Uk, der in dem Hardware-Token gespeichert ist, aus dem Hardware-Token an den Computer;
Eintragen (S105) des gelesenen öffentlichen Benutzerschlüssels Uk von dem Computer in einer Zertifizierungsstelle;
Empfangen (S107) eines von der Zertifizierungsstelle ausgestellten Zertifikats in Bezug auf den öffentlichen Benutzerschlüssel Uk durch den Computer; und
Speichern (S108) des ausgestellten Zertifikats für den öffentlichen Benutzerschlüssel Uk in dem Hardware-Token mittels des Computers; und
zum Zeitpunkt der Verwendung des Benutzerzertifikats:
Senden (S152) von einer oder mehreren Zufallszahlen R, die in dem Hardware-Token erzeugt werden, durch das Hardware-Token an den Computer;
Empfangen einer Unterschrift Ck'(R) durch das Hardware-Token, die auf den Zufallszahlen R mit einem geheimen Rechnerschlüssel Ck' gebildet wurde;
Bestätigen der Echtheit (S156) der Unterschrift Ck'(R) durch das Hardware-Token unter Verwendung des gespeicherten öffentlichen Computerschlüssels Ck;
wenn die Identitätsprüfung der Unterschrift Ck'(R) erfolgreich ist, Zugreifen des Computer auf einen fernen Identitätsprüfungs-Server;
Empfangen einer Zufallszahl R' durch das Hardware-Token von einem fernen Identitätsprüfungs-Server über den Computer;
Unterzeichnen der Zufallszahl R' mit dem geheimen Benutzerschlüssel Uk' durch das Hardware-Token;
Senden der Unterschrift Uk'(R') durch das Hardware-Token an den fernen Identitätsprüfungs-Server über den Computer; und
Bestätigen der Identität des des Computers durch den Fernzugriff-Identitätsprüfungsserver, indem das von der Zertifizierungsstelle ausgestellte Benutzerzertifikat verwendet wird.

2. Verfahren zur Identitätsprüfung nach Anspruch 1, das des Weiteren die folgenden Schritte umfasst:
Senden eines Zertifikats für den öffentlichen Rechnerschlüssel Ck, dessen Echtheit in der Zertifizierungsstelle bestätigt wurde, von dem Rechner an das Hardware-Token;
wenn die Echtheit des öffentlichen Rechnerschlüssels Ck von dem Hardware-Token unter Verwendung eines gespeicherten Zertifikats für einen öffentlichen Zertifizierungsstellen-Schlüssel Ak der Zertifizierungsstelle bestätigt wird, Empfangen des Identitätsnachweises der Unterschrift Ck'(R), welcher durch das Hardware-Token unter Verwendung des öffentlichen Rechnerschlüssels Ck erbracht wird, durch den Rechner.

3. Verfahren zur Identitätsprüfung nach Anspruch 2, das des Weiteren die folgenden Schritte umfasst:
Abrufen des Zertifikats für den öffentlichen Zertifizierungsstellen-Schlüssel Ak, dessen Echtheit in der Zertifizierungsstelle bestätigt wurde, durch den Computer;
Speichern des abgerufenen Zertifikats für den öffentlichen Zertifizierungsstellen-Schlüssel Ak von dem Computer in dem Hardware-Token.

4. System zur Identitätsprüfung, das einen Computer (10) und ein Hardware-Token (30) aufweist, welches mit dem Rechner verbunden werden kann und so ausgelegt ist, dass es alle Schritte nach einem der Ansprüche 1 bis 3 durchführt.

5. Computerprogramm, das ein Programmcode-Mittel umfasst, das so ausgelegt ist, dass es alle Schritte nach einem der Ansprüche 1 bis 3 durchführt, wenn das Programm auf einem Computer ausgeführt wird.

## Revendications

1. Procédé d'authentification utilisant un jeton matériel (30) pouvant être connecté à un ordinateur, ledit procédé comprenant les étapes consistant à :
au moment de la mémorisation d'un certificat d'utilisateur :
générer (S103) une clé publique d'utilisateur Uk et une clé d'utilisateur secrète Uk' au moyen du jeton matériel ;
mémoriser la clé publique d'utilisateur Uk et la clé d'utilisateur secrète Uk' dans le jeton matériel au moyen du jeton matériel ;
mémoriser (S102) une clé publique d'ordinateur Ck pour l'ordinateur dans le jeton matériel au moyen de l'ordinateur ;
lire S104), du jeton matériel à l'ordinateur, la clé publique d'utilisateur Uk mémorisée dans le jeton matériel ;
enregistrer (S105) la clé publique d'utilisateur Uk lue de l'ordinateur dans un service de certification ;
recevoir (S107), par l'ordinateur, un certificat émis par le service de certification relativement à la clé publique d'utilisateur Uk ; et
mémoriser (S108) le certificat émis pour la clé publique d'utilisateur Uk dans le jeton matériel au moyen de l'ordinateur ; et
au moment de l'utilisation du certificat d'utilisateur:
envoyer (S152), par le jeton matériel, à l'ordinateur, un ou plusieurs nombres R aléatoires générés dans le jeton matériel ;
recevoir par le jeton matériel, une signature Ck'(R) formée sur les nombres R aléatoires avec une clé secrète d'ordinateur Ck' ;
authentifier (S156), par le jeton matériel, la signature Ck'(R) en utilisant la clé publique d'ordinateur Ck mémorisée ;
si l'authentification de la signature Ck'(R) est réussie, l'ordinateur accédant à un serveur d'authentification distant ; recevoir, par le jeton matériel depuis un serveur d'authentification distant via l'ordinateur, un nombre aléatoire R' ;
signer, par le jeton matériel, le nombre aléatoire R' avec la clé secrète d'utilisateur Uk' ;
envoyer, par le jeton matériel, la signature Uk'(R') au serveur d'authentification distant via l'ordinateur ; et
le serveur d'authentification à accès distant authentifiant l'ordinateur en utilisant le certificat d'utilisateur émis par le service de certification.

2. Procédé d'authentification selon la revendication 1, comprenant en outre les étapes consistant à :
envoyer, de l'ordinateur au jeton matériel, un certificat pour la clé publique d'ordinateur Ck authentifiée dans le service de certification ;
si la clé publique d'ordinateur Ck est authentifiée par le jeton matériel en utilisant un certificat mémorisé pour une clé publique du service de certification Ak du service de certification, recevoir par l'ordinateur l'authentification de la signature CK'(R) effectuée par le jeton matériel en utilisant la clé publique d'ordinateur Ck.

3. Procédé d'authentification selon la revendication 2, comprenant en outre les étapes consistant à :
obtenir, par l'ordinateur, le certificat pour la clé publique du service de certification Ak authentifiée dans le service de certification ;
mémoriser dans le jeton matériel le certificat obtenu de l'ordinateur pour la clé publique du service de certification Ak.

4. Système d'authentification ayant un ordinateur (10) et un jeton matériel (30) pouvant être connecté à l'ordinateur et adapté pour mettre en oeuvre toutes les étapes de l'une quelconque des revendications 1 à 3.

5. Logiciel comprenant des moyens de code de programme adaptés pour mettre en oeuvre toutes les étapes de l'une quelconque des revendications 1 à 3, quand ledit programme est exécuté sur un ordinateur.
